# FASCICULE DE BREVET EUROPEEN

(11) **EP 2 476 028 B1**
(45) Date de publication et mention de la délivrance du brevet: **21.08.2013**
(21) Numéro de dépôt: 10747438.9
(22) Date de dépôt: 16.08.2010
(51) Int. Cl.: G04B 17/06, F16F 1/10

(54) **RESSORT SPIRAL**
SPIRALFEDER
SPIRAL SPRING

(30) Priorité: 07.09.2009 CH 13852009
(43) Date de publication de la demande: 18.07.2012
(73) Titulaire: Manufacture et fabrique de montres et de chronomètres Ulysse Nardin Le Locle S.A., 2400 Le Locle (CH)
(72) Inventeur: VON GUNTEN, Stéphane, CH-2035 Corcelles (CH); HUMAIR, Lucas, CH-2022 Bevaix (CH); GYGAX, Pierre, CH-2016 Cortaillod (CH)
(74) Mandataire: Ballot, Gabriel
(86) Numéro de dépôt international: PCT/EP2010/061913
(87) Numéro de publication internationale: WO 2011/026725

(56) Documents cités:
- EP-A1- 2 151 722
- EP-A2- 2 063 325
- WO-A-2008/064714
- WO-A2-2004/029733
- CH-A5- 697 207
- CH-B1- 700 812
- DE-A1- 3 216 449
- US-A1- 2008 171 604
- SUIBERTW: "Basel2007* Moser's New Double Straumann Hairspring Escapement", INTERNET CITATION, [Online] 12 avril 2007 (2007-04-12), pages 1-5, XP002502705, Extrait de l'Internet: URL:http://basel.watchprosite.com/show-nbl og.post/ti-360412/> [extrait le 2008-11-06]

## Description

### Domaine technique

La présente invention se rapporte au domaine de l'horlogerie mécanique. Elle concerne, plus particulièrement, un ressort spiral destiné à équiper un organe régulateur d'une montre mécanique.

### Etat de la technique

Dans les horloges, les pendules et les montres mécaniques ou électroniques, on a toujours un organe régulateur permettant, comme son nom l'indique, de réguler la marche de la pièce d'horlogerie. Dans le cas d'une montre mécanique, l'organe de régulation est constitué d'un balancier et d'un ressort spiral.

De manière conventionnelle, le spiral est une lame, en général métallique, de section rectangulaire enroulée sur elle-même en forme de spirale d'Archimède. Il est fixé, en son centre, sur l'axe de balancier, par une pièce appelée virole. L'extérieur du spiral est fixé à un pont de balancier, nommé coq, par une pièce appelée piton. Le piton est fixé soit directement au coq, soit par l'intermédiaire d'un porte-piton mobile.

Un tel montage d'un spiral n'est pas optimal pour l'isochronisme de la montre. En effet, le centre du spiral se déplace au cours de son développement, ce qui induit des forces de réactions au niveau des pivots de l'axe de balancier. L'intensité des forces exercées sur les pivots participent grandement à l'isochronisme que l'on observe généralement.

On connaît des pièces d'horlogerie munies de deux spiraux montés sur l'axe de balancier, en sens opposés, disposés dans des plans différents. La maison H. Moser & Cie propose un échappement muni de deux spiraux disposés de part et d'autre du balancier, en sens opposés. Le document EP2063325 propose un mécanisme selon le préambule de la revendication 1 et comportant deux spiraux traditionnels disposés de manière concentrique et coplanaire. On sait qu'il est difficile d'obtenir des caractéristiques précises pour des spiraux réalisés de manière traditionnelle et que donc, deux spiraux seront le plus souvent différents, même légèrement. Ainsi, le réglage d'un tel balancier muni de deux spiraux aux caractéristiques différentes, l'alignement des forces exercées par les deux spiraux, présentent des difficultés. En outre, la différence probable entre les deux spiraux fait que la résultante des forces exercées au niveau de l'axe du balancier est, dans la majorité des cas, non nulle et difficile à maitriser.

La présente invention a donc pour but de proposer un spiral permettant d'améliorer l'isochronisme d'une montre, tout en restant simple à mettre en oeuvre.

### Divulgation de l'invention

De manière plus précise, l'invention porte sur un ressort spiral de mouvement de montre tel que défini à la revendication 1.

D'autres caractéristiques de l'invention sont données dans les revendications dépendantes.

### Brève description des dessins

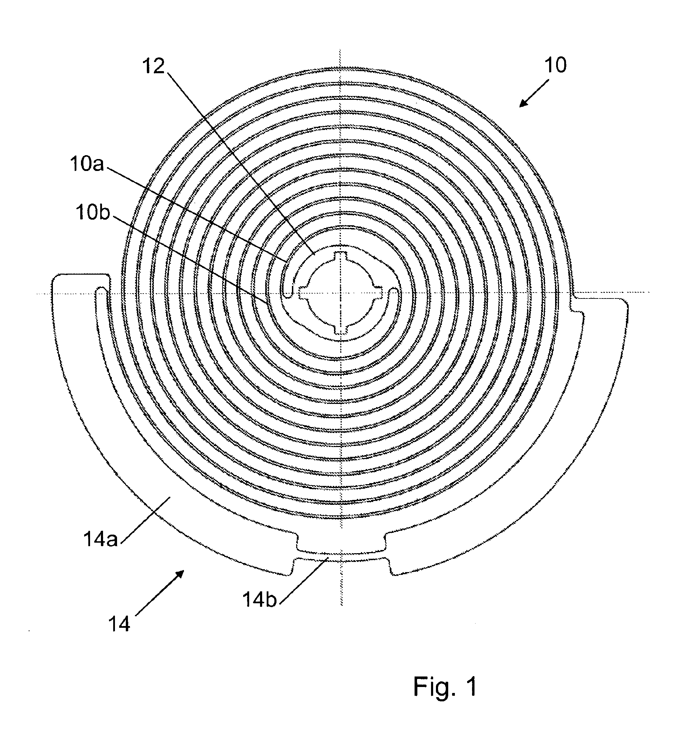

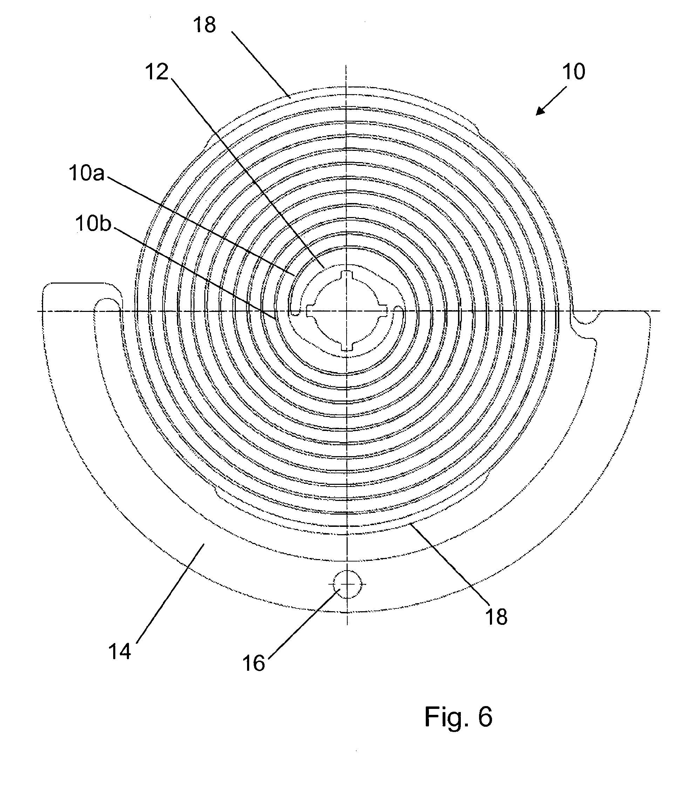

D'autres caractéristiques de la présente invention apparaîtront plus clairement à la lecture de la description qui va suivre, faite en référence au dessin annexé, dans lequel les figures 1 à 5 montrent, en vue de dessus, des vues schématiques de différents exemples illustratifs pour mieux comprendre l'invention. La figure 6 montre un mode de réalisation de l'invention.

### Mode(s) de réalisation de l'invention

La figure 1 représente un ressort spiral 10 plat. Il comprend une première extrémité intérieure associée à une virole 12.

Particulièrement, à partir de la virole 12 se déploient plusieurs lames, le dessin en illustrant deux. On a donc une première 10a et une deuxième 10b lames, enroulées dans le même plan et dans le même sens. Les lames 10a et 10b sont enroulées l'une dans l'autre, les spires de l'une étant intercalées entre les spires de l'autre. La première 10a et la deuxième 10b lames sont disposées à 180° l'une de l'autre. Les lames sont identiques, de sorte que les extrémités des lames sont situées sur un cercle et sont situées à 180° l'une de l'autre.
Le document EP2151722 a été publié le 10 février 2010. Il constitue donc un art antérieur selon l'article 54(3) CBE. Ce document décrit un ressort spiral de mouvement de montre, comportant une pluralité de lames coplanaires enroulées l'une dans l'autre, les extrémités intérieures de chaque lame étant solidaires d'une unique virole. Ce document décrit également que les extrémités extérieures de chaque lame sont reliées entre elles par un cadre rigide muni d'au moins une portion pour recevoir un organe d'attache, ledit cadre, les lames et la virole étant réalisées en une pièce monolithique.

De manière avantageuse, les extrémités extérieures des lames sont reliées entre elles par un cadre rigide 14, c'est-à-dire que le cadre ne contribue pas (quasiment pas) au couple élastique exercé par le ressort. La forme du cadre 14 présente une symétrie circulaire par rapport au centre du spiral. De préférence, le cadre suit une trajectoire circulaire, concentrique au spiral.

Typiquement, comme le permettent les techniques de mise en forme des matériaux de type silicium, la virole 12 est réalisée d'une pièce avec le reste du spiral. De manière avantageuse, afin que les lames présentent des caractéristiques élastiques identiques, les deux lames 10a et 10b, la virole 12 et le cadre 14 sont réalisés d'une pièce, de manière monolithique. Pour ce faire, on pourra réaliser le spiral selon l'invention dans des matériaux conformables par des techniques de gravure profonde, particulièrement à des spiraux à base de silicium, notamment en silicium monocristallin, éventuellement recouvert d'une couche d'oxyde de silicium, mais également à des spiraux réalisés en diamant, obtenu par croissance puis par gravure profonde, ou encore à des spiraux réalisés en DCS (de l'anglais Diamond Coated Silicon), c'est-à-dire des spiraux en silicium recouverts de diamant.

Grâce à l'agencement symétrique de deux lames 10a et 10b identiques, chacune des lames exerce sur l'axe du balancier une force compensant la force exercée par l'autre lame. Ainsi, les réactions sur l'axe sont minimisées, voire quasi nulles, ce qui permet d'améliorer l'isochronisme de l'oscillateur.

Le cadre 14 est agencé de manière à pouvoir supporter un organe d'attache, de préférence un piton, pour relier le spiral à un porte piton fixé sur le mouvement. Dans l'exemple de la figure 1, le cadre présente une portion de largeur adaptée pour recevoir un piton fendu, connu de l'homme du métier. Plus précisément, le cadre présente une zone large 14a et une zone plus fine 14b pour recevoir le piton. Ce dernier est fixé au cadre par une technique adaptée, telle que le collage ou le soudage, choisie par l'homme du métier.

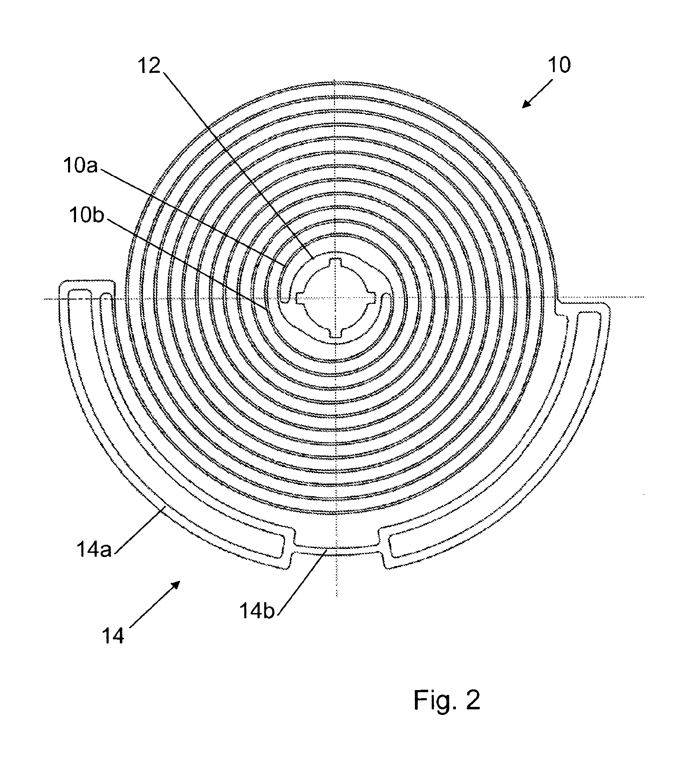

Les figures 2 à 5 proposent différentes exécutions pour réaliser le cadre 14. Sur les figures 2 à 4, le cadre 14 est semi-circulaire et relie les deux extrémités des lames disposées à 180°. Sur la figure 2, les zones larges 14a du cadre sont évidées, ce qui permet d'alléger le spiral dans sa zone extérieure, ce qui est toujours intéressant pour limiter les efforts au piton en cas de choc.

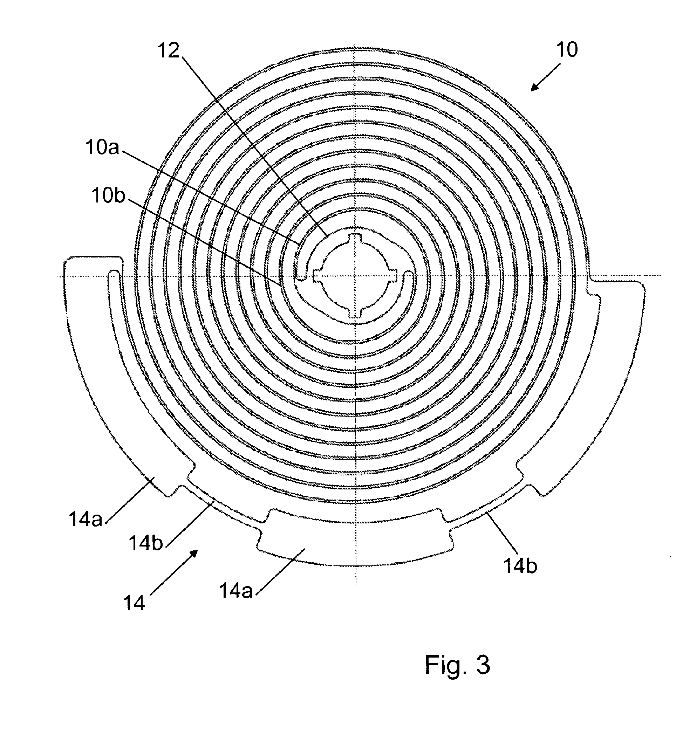

Sur la figure 3, le cadre 14 présente plusieurs zones fines 14b, permettant de positionner le piton à plusieurs endroits autour du cadre, ce qui peut donner de la souplesse pour la construction du mouvement.

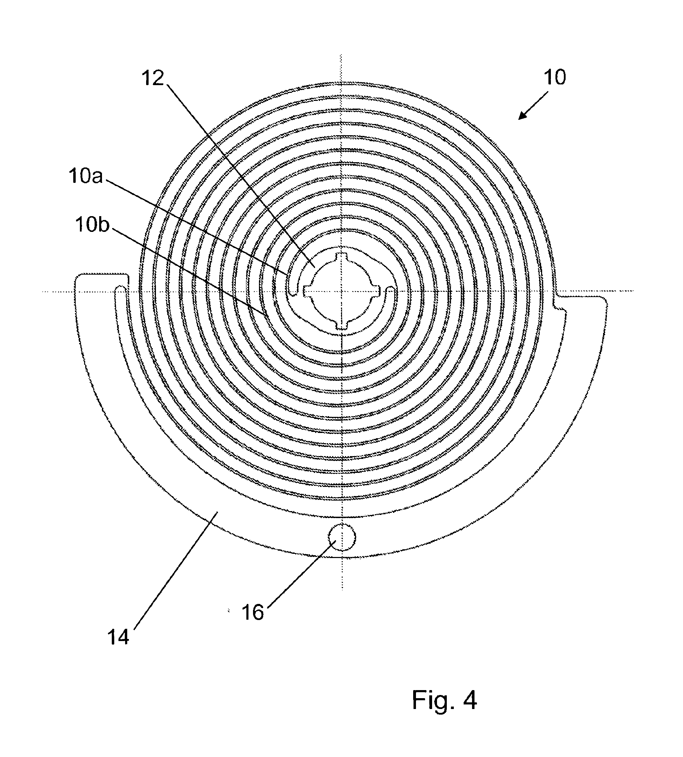

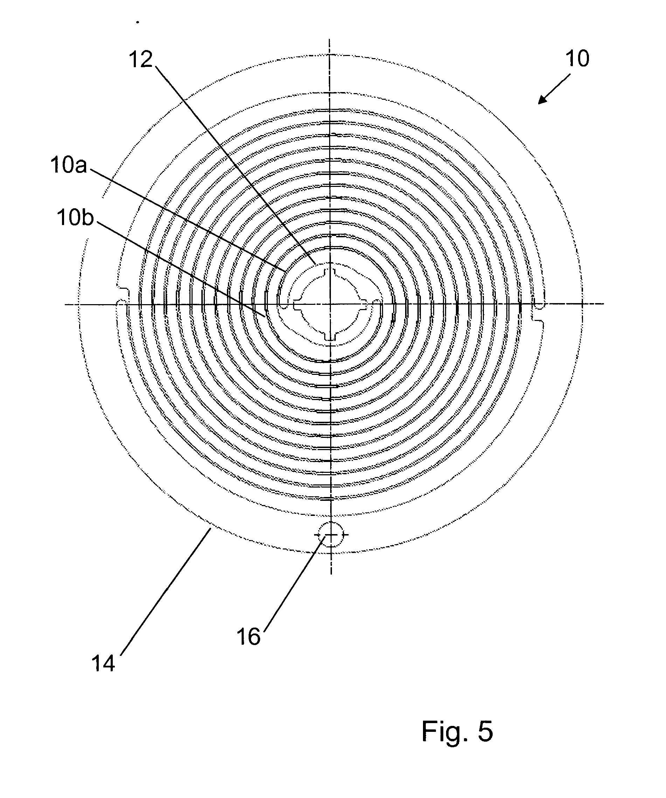

La figure 4 propose un cadre muni d'un trou 16 pour recevoir un piton non fendu, susceptible d'être logé et fixé dans le trou. Le cadre 14 de la figure 5 est agencé de la même façon, mais fait un cercle complet en reliant les extrémités extérieures des lames par leurs deux côtés. La répartition des masses est ainsi parfaitement symétrique. On notera que, même dans la configuration où le cadre est muni d'un trou, le cadre pourrait être évidé. Plusieurs trous peuvent également être disposés sur le cadre.

Bien que les figures ne montrent que des exemples dans lesquels le ressort spiral 10 comporte deux lames, on peut en prévoir davantage. On peut ainsi avoir n lames identiques, réparties à 360°/n autour de la virole, les extrémités extérieures se trouvant également réparties à 360°/n*.* Un tel arrangement permet d'améliorer la répartition des lames et des efforts autour de l'axe du balancier et donc, une meilleure compensation.

Dans un tel cas, avec n lames, un cadre 14 en forme d'arc de cercle, définit un angle de 360°/n, ou un multiple de cette valeur, selon le choix de l'homme du métier. Un cadre circulaire complet est également possible.

Chaque lame s'enroulant entre les spires des autres lames, on comprend que, pour un spiral de dimension donnée, l'augmentation du nombre de lames entraîne, d'une part, la réduction de la longueur active de chaque lame. Ainsi, par rapport à un spiral conventionnel occupant une surface S, muni d'une seule lame dont la longueur active est L et d'épaisseur e (l'épaisseur étant la dimension de la lame dans le plan du spiral) et de pas entre les spires p, un spiral selon l'invention avec n lames d'épaisseur e, de pas p pour chaque spire, occupant la même surface S, chaque lame aura une longueur active de longueur Un. Ceci a pour conséquence d'augmenter la rigidité de la lame, mais on peut le compenser en diminuant l'épaisseur de chaque lame, ce qui permet d'augmenter la longueur active et de diminuer la rigidité. Il est ainsi aisé d'obtenir un couple total désiré et conforme aux couples obtenus avec des ressorts spiraux conventionnels. On peut aussi envisager de réaliser des spiraux occupant une surface plus importante afin d'obtenir des lames de longueur désirée. D'un point de vue pratique, on préférera des spiraux à 2, 3 ou 4 lames.

La figure 6 propose un ressort spiral 10 selon l'invention dont la spire extérieure de chaque lame est munie d'un renfort 18 permettant de corriger le centrage du spiral et d'amener le centre de gravité de la partie active au centre d'action du couple élastique, c'est-à-dire au centre du spiral. Un tel renfort 18 permet d'améliorer la concentricité du développement du spiral et de réduire encore les réactions au pivot. On notera que le renfort 18 en lui-même ne participe pas à la définition du couple élastique du spiral. Comme le montre la figure 6, le pas séparant la dernière spire et l'avant dernière spire est constant, c'est-à-dire que la dernière spire est à distance constante de l'avant dernière spire, y-compris au niveau du renfort. On pourrait également envisager que la distance entre la dernière spire et l'avant dernière spire soit inférieure au pas séparant les autres spires, particulièrement au niveau du renfort.

La présente description n'a été donnée qu'à titre d'illustration non limitative de l'invention et l'homme du métier peut encore prévoir diverses alternatives découlant directement de la description donnée ci-dessus, sans sortir du cadre défini par les revendications. Notamment, le pas de chaque lame peut être constant comme représenté au dessin, mais il peut également varier. En outre, le piton peut être remplacé par un autre mode de fixation, notamment une vis pour solidariser directement le cadre avec le coq.

## Revendications

1. Ressort spiral (10) de mouvement de montre, comportant une pluralité de lames (10a, 10b) coplanaires enroulées l'une dans l'autre,
les extrémités intérieures de chaque lame étant solidaires d'une unique virole (12), **caractérisé**
**en ce que** les extrémités extérieures de chaque lame sont reliées entre elles par un cadre (14) rigide muni d'au moins une portion pour recevoir un organe d'attache, ledit cadre (14), les lames (10a, 10b) et la virole (12) étant réalisées en une pièce monolithique, et
**en ce que** la dernière spire des lames comporte un renfort (18) agencé de manière à amener le centre de gravité de la partie active au centre d'action du couple élastique.

2. Ressort spiral selon la revendication 1, **caractérisé en ce qu'**il comporte n lames décalées de 360°/n.

3. Ressort spiral selon la revendication 2, **caractérisé en ce que** n est compris entre 2 et 4, bornes incluses.

4. Ressort spiral selon l'une des revendications 1 à 3, **caractérisé en ce que** le pas de chaque lame est constant.

5. Ressort spiral selon l'une des revendications 1 à 3, **caractérisé en ce que** le pas de chaque lame est variable.

6. Ressort spiral selon l'une des revendications 1 à 5, **caractérisé en ce que** la cadre (14) comporte des zones larges (14a) et au moins une zone fine (14b), ladite zone fine étant destinée à recevoir un piton pour attacher le ressort spiral au mouvement de montre.

7. Ressort spiral selon l'une des revendications 1 à 5, **caractérisé en ce que** la cadre (14) comporte au moins un trou (16) destiné à recevoir un piton pour attacher le ressort spiral au mouvement de montre.

8. Ressort spiral selon l'une des revendications 1 à 7, **caractérisé en ce que** le cadre comporte des zones évidées.

9. Ressort spiral selon l'une des revendications 1 à 8, **caractérisé en ce que** le cadre forme un cercle dont le centre est le centre du spiral.

10. Ressort spiral selon l'une des revendications 2 à 8, **caractérisé en ce que** le cadre forme un arc de cercle, d'angle multiple de 360°/n.

11. Ressort spiral selon l'une des revendications 1 à 10, **caractérisé en ce qu'**il est réalisé à base de silicium, notamment en silicium monocristallin, éventuellement recouvert d'une couche d'oxyde de silicium ou d'une couche de diamant.

12. Procédé de fabrication d'un ressort spiral selon l'une des revendications 1 à 11, **caractérisé en ce qu'**il est réalisé à base de diamant, obtenu par croissance puis par gravure profonde.

## Patentansprüche

1. Uhrwerks-Spiralfeder (10), die eine Vielzahl koplanarer, ineinander eingerollter Klingen (10a, 10b) aufweist, wobei die inneren Enden jeder Klinge mit einer einzigen Spiralrolle (12) verbunden sind, **dadurch gekennzeichnet, dass** die äußeren Enden jeder Klinge anhand eines starren Rahmens (14) miteinander verbunden sind, der mit mindestens einem Abschnitt zur Aufnahme eines Befestigungsorgans ausgestattet ist, wobei der Rahmen (14), die Klingen (10a, 10b) und die Spiralrolle (12) aus einem monolithischen Teil hergestellt sind, und
dass die letzte Windung der Klingen eine Verstärkung (18) aufweist, die derart ausgebildet ist, dass das Schwerkraftzentrum des aktiven Teils in das Aktionszentrum des elastischen Kraftmoments geführt wird.

2. Spiralfeder nach Anspruch 1, **dadurch gekennzeichnet, dass** sie n um 360°/n versetzte Klingen aufweist.

3. Spiralfeder nach Anspruch 3, **dadurch gekennzeichnet, dass** n zwischen 2 und 4 inklusive ist, Klemmen inbegriffen.

4. Spiralfeder nach einem der Ansprüche 1 bis 3, **dadurch gekennzeichnet, dass** die Ganghöhe jeder Klinge konstant ist.

5. Spiralfeder nach einem der Ansprüche 1 bis 3, **dadurch gekennzeichnet, dass** die Ganghöhe jeder Klinge variabel ist.

6. Spiralfeder nach einem der Ansprüche 1 bis 5, **dadurch gekennzeichnet, dass** der Rahmen (14) breite Zonen (14a) und mindestens eine schmale Zone (14b) aufweist, wobei die schmale Zone zur Aufnahme eines Klötzchens zwecks Befestigung der Spiralfeder am Uhrwerk bestimmt ist.

7. Spiralfeder nach einem der Ansprüche 1 bis 5, **dadurch gekennzeichnet, dass** der Rahmen (14) mindestens ein Loch (16) aufweist, das zur Aufnahme eines Klötzchens zwecks Befestigung der Spiralfeder am Uhrwerk bestimmt ist.

8. Spiralfeder nach einem der Ansprüche 1 bis 7, **dadurch gekennzeichnet, dass** der Rahmen ausgesparte Zonen aufweist.

9. Spiralfeder nach einem der Ansprüche 1 bis 8, **dadurch gekennzeichnet, dass** der Rahmen einen Kreis bildet, dessen Mitte die Mitte der Spiralfeder ist.

10. Spiralfeder nach einem der Ansprüche 2 bis 8, **dadurch gekennzeichnet, dass** der Rahmen einen Kreisbogen bildet mit einem Winkel, der ein Vielfaches von 360°/n ist.

11. Spiralfeder nach einem der Ansprüche 1 bis 10, **dadurch gekennzeichnet, dass** sie auf der Basis von Silizium, insbesondere von monokristallinem Silizium, eventuell bezogen mit einer Siliziumoxidschicht oder einer Diamantschicht, hergestellt ist.

12. Herstellungsverfahren einer Spiralfeder nach einem der Ansprüche 1 bis 11, **dadurch gekennzeichnet, dass** sie auf der Basis von Diamant hergestellt ist, der durch Wachstum mit darauffolgender Tiefengravur erhalten wurde.

## Claims

1. A watch movement balance-spring (10), comprising a plurality of coplanar blades (10a, 10b) wound in one another, the ends of each blade being secured to a single collet (12), **characterized in that** the outer ends of each blade are connected to each other by a rigid frame (14) provided with at least one portion for receiving a fastening organ, said frame (14), the blades (10a, 10b) and the collet (12) being made in a monolithic piece, and
**in that** the last wind of the blades includes a stiffener (18) arranged so as to bring the center of gravity of the active part to the action center of the elastic torque.

2. The balance-spring according to claim 1, **characterized in that** it includes n blades offset by 360°/n.

3. The balance-spring according to claim 2, **characterized in that** n is comprised between 2 and 4, bounds inclusive.

4. The balance-spring according to one of claims 1 to 3, **characterized in that** the pitch of each blade is constant.

5. The balance-spring according to one of claims 1 to 3, **characterized in that** the pitch of each blade is variable.

6. The balance-spring according to one of claims 1 to 5, **characterized in that** the frame (14) includes wide areas (14a) and at least one thin area (14b), said thin area being designed to receive a balance-spring stud to attach the balance-spring to the watch movement.

7. The balance-spring according to one of claims 1 to 5, **characterized in that** the frame (14) includes at least one hole (16) designed to receive a balance-spring stud to attach the balance-spring to the watch movement.

8. The balance-spring according to one of claims 1 to 7, **characterized in that** the frame includes recessed areas.

9. The balance-spring according to one of claims 1 to 8, **characterized in that** the frame forms a circle, the center of which is the center of the balance-spring.

10. The balance-spring according to one of claims 2 to 8, **characterized in that** the frame forms an arc of circle, with an angle that is a multiple of 360°/n.

11. The balance-spring according to one of claims 1 to 10, **characterized in that** it is made with a base of silicon, in particular monocrystalline silicon, optionally covered with a layer of silicon oxide or a layer of diamond.

12. A method for manufacturing a balance-spring according to one of claims 1 to 11, **characterized in that** it is made with a base of diamond, obtained by growth, then deep etching.
